(19) Europäisches Patentamt
European Patent Office
Office européen des brevets

(11) **EP 3 617 658 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(51) Int Cl.:
***G01D 5/14*** *(2006.01)*

(21) Anmeldenummer: **19189256.1**

(22) Anmeldetag: **31.07.2019**

(54) **SENSOR**

SENSOR

CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2018   DE 102018120811**

(43) Veröffentlichungstag der Anmeldung:
**04.03.2020   Patentblatt 2020/10**

(73) Patentinhaber: **SICK AG**
**79183 Waldkirch (DE)**

(72) Erfinder: **Bludau, Thomas**
**79111 Denzlingen (DE)**

(56) Entgegenhaltungen:
**DE-A1- 10 204 314          DE-A1- 19 928 557**
**DE-A1-102016 110 968**

**Beschreibung**

Die vorliegende Erfindung betrifft einen Sensor zur berührungslosen magnetischen Erfassung linearer Relativbewegungen eines Gebermagneten entlang einer Messstrecke mit mindestens einem Sensorelement gemäß dem Oberbegriff von Anspruch 1.

In Pneumatikzylindern wird eine Kolbenposition meist über einen auf dem Kolben befestigten Gebermagneten bestimmt. Die Eigenschaften wie Ausrichtung, Magnetisierung, Remanenz oder Geometrie des Magneten können dabei variieren.

Bei der Positionsmessung gibt es in vielen Fällen das Problem, dass die Steigung der Kennlinie des Sensorelements nicht bekannt ist oder die Kennlinie einen nicht zu vernachlässigenden Linearitätsfehler aufweisen, der vom Anwender korrigiert werden muss. Wenn eine hohe Positionspräzision gefordert wird, kann die Linearisierung bzw. die Minimierung des Linearitätsfehlers sehr aufwändig werden.

Bekannt sind mehrere Linearisierungsverfahren.

1) Können mehrere Messpunkte der Kurve bzw. Kennlinie aufgenommen werden oder sind diese bekannt, so kann entweder ein Polynomfit erfolgen oder zwischen den Messpunkten linear interpoliert werden. Je mehr Messpunkte aufgenommen werden, umso besser die Approximation und desto niedriger der Linearitätsfehler.

2) Ein weiteres Verfahren kann angewendet werden, wenn die generelle Kurvenform bzw. Kennlinie bekannt ist. Dann reicht ein einzelner definierter Messpunkt, um die Kurve bzw. Kennlinie zu normieren und durch entsprechende Fitparameter anzunähern.

Jedes Verfahren, das im Stand der Technik beschrieben wurde, hat den Nachteil, dass die entsprechenden Messpunkte bekannt sein müssen. In vielen Applikationen stehen diese Informationen aber aus verschiedenen Gründen nicht zur Verfügung. Beispielsweise bei einem sehr kurzen Verfahrweg des Gebermagneten. Eine Linearisierung mit den oben genannten Verfahren ist dann nicht möglich.

Die DE 199 28 557 A1 offenbart ein Verfahren und eine Vorrichtung zur Bestimmung einer Position entlang eines innerhalb eines Magnetfeldes verlaufenden Positionierweges, wobei das Magnetfeld entlang dem Positionierweg einen nicht konstanten, durch eine Funktionsgleichung beschreibbaren magnetischen Induktionsverlauf aufweist. Es wird die Induktion an einer Messposition gemessen und aus dem Induktions-Messsignal mit Hilfe der Funktionsgleichung ein Positionssignal ermittelt. Dabei wird die Induktion an zwei unterschiedlichen Messpositionen des Positionierweges gemessen. Aus den beiden Induktions-Messsignalen sowie dem Abstand der beiden Messpositionen zueinander wird das Positionssignal ermittelt.

Eine Aufgabe der Erfindung besteht darin, einen Sensor bereitzustellen, welcher ein linearisiertes Positionssignal aufweist.

Die Aufgabe wird gemäß Anspruch 1 gelöst durch einen Sensor zur berührungslosen magnetischen Erfassung linearer Relativbewegung eines Gebermagneten entlang einer Messstrecke mit mindestens zwei identischen Sensorelementen, wobei jedes Sensorelement mindestens einen Komponenten eines Magnetfeldes des Gebermagneten erfasst, wobei die Sensorelemente in einem Abstand entlang der Messstrecke angeordnet sind, wobei das Sensorelement kürzer ist als die Messstrecke, wobei die Sensorelemente jeweils ein monotones Positionssignal mit jeweils einem Wert eines Wertebereichs für jeweils eine Position entlang der Messstrecke des Gebermagneten erzeugen, wobei die Kennlinien der Positionssignale jeweils eine Punktsymmetrie aufweisen, wobei eine Auswerteeinheit vorgesehen ist, wobei die Auswerteeinheit ausgebildet ist, ein linearisiertes Positionssignal nach der Formel;

$$\text{Linearisiertes Positionssignal} = -(1 + \text{Positionssignal des ersten Sensorelements}/\text{Positionssignal des zweiten Sensorelements}) * \text{Abstand}/2$$

zu berechnen, wenn der Absolutwert des Positionssignal des ersten Sensorelements kleiner dem Absolutwert des Positionssignals des zweiten Sensorelements ist, oder nach der Formel;

$$\text{Linearisiertes Positionssignal} = (1 + \text{Positionssignal des zweiten Sensorelements}/\text{Positionssignal des ersten Sensorelements}) * \text{Abstand}/2$$

zu berechnen, wenn der Absolutwert des Positionssignal des ersten Sensorelements größer dem Absolutwert des Positionssignals des zweiten Sensorelements ist, so dass ein linearisiertes Positionssignal mit einem linearisierten Wertebereich über die gesamte Messstrecke gebildet ist.

Die Bedingung kann demnach auch wie folgt beschrieben werden:
Wenn |Wert des Positionssignal des ersten Sensorelements| < |Wert des Positionssignal des zweiten Sensorelements| dann ist das linearisierte Positionssignal = -(1 + Positionssignal des ersten Sensorelements/Positionssignal des zweiten Sensorelements) * Abstand/2.

Wenn |Wert des Positionssignal des ersten Sensorelements| > |Wert des Positionssignal des zweiten Sensorelements| dann ist das linearisierte Positionssignal = (1 + Positionssignal des zweiten Sensorelements/Positionssignal des ersten Sensorelements) * Abstand/2.

Der wesentliche Gedanke besteht darin, zwei oder mehrere um einen definierten Abstand in Ausbreitungsrichtung der Kennlinie verschobene Sensorelemente zu verwenden. Der Linearitätsfehler sowie der erreichbare Messbereich hängen dabei im Wesentlichen vom Abstand der beiden Kennlinien zueinander ab.

Sind die Elemente in einem geeigneten Abstand angeordnet, so ergibt sich mit dem hier erfindungsgemäßen Algorithmus ein sehr gut linearisiertes Positionssignal.

Die Erfindung ermöglicht es ein absolutes, lineares Positionssignal aus zwei identischen, nichtlinearen Kennlinien zu berechnen ohne die genaue Beschaffenheit der Kennlinien zu kennen. Es müssen somit keine Messpunkte aufgenommen werden oder Fitparameter bestimmt werden.

In Weiterbildung der Erfindung ist der Abstand der Sensorelemente kleiner 20 mm, insbesondere kleiner 15 mm. Dadurch weist der Sensor insbesondere für kurze Wegstrecken eines Gebermagneten ein lineares Positionssignal auf.

In Weiterbildung der Erfindung ist der Abstand der Sensorelemente kleiner 11 mm. Dadurch ist im Bereich von Kurzhubkolben einer Kolben-Zylinderanordnung eine sehr genaue Positionsmessung möglich.

In Weiterbildung der Erfindung erfasst das Sensorelement zwei senkrecht zueinander stehende Komponenten eines Magnetfeldes des Gebermagneten.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Figur 1            eine Kolben-Zylinderanordnung 17 mit einem Sensor 1;
Figur 2 und Figur 3      jeweils Kennlinien der Positionssignale.

In den nachfolgenden Figuren sind identische Teile mit identischen Bezugszeichen versehen.

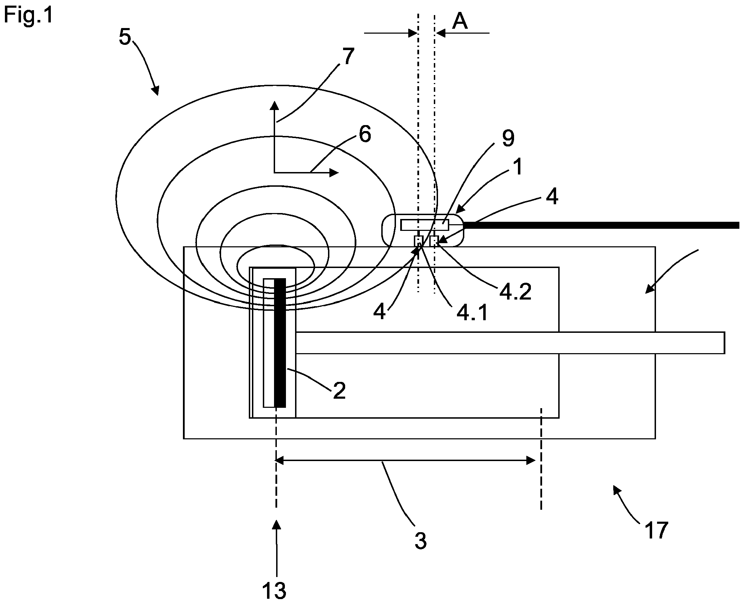

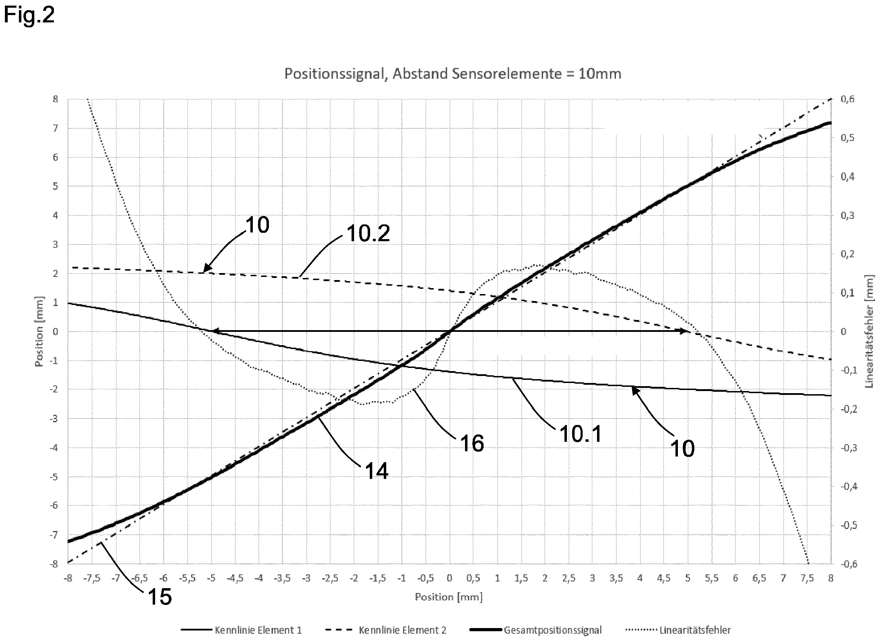

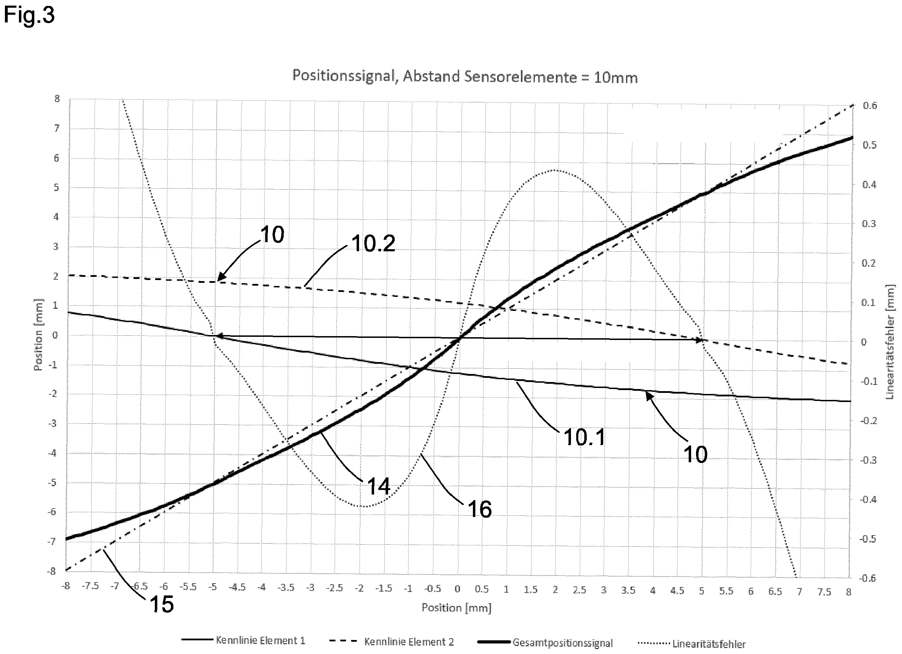

Figur 1 zeigt eine Kolben-Zylinderanordnung 17 mit einem Sensor 1. Figur 1 zeigt einen Sensor 1 zur berührungslosen magnetischen Erfassung linearer Relativbewegung eines Gebermagneten 2 entlang einer Messstrecke 3 mit mindestens zwei identischen Sensorelementen 4, nämlich Sensorelement 4.1 und Sensorelement 4.2, wobei jedes Sensorelement 4.1 und 4.2 mindestens eine Komponente 6, 7 eines Magnetfeldes 5 des Gebermagneten erfasst, wobei die Sensorelemente in einem Abstand A entlang der Messstrecke 3 angeordnet sind, wobei die Sensorelemente 4.1 und 4.2 kürzer sind als die Messstrecke 3, wobei die Sensorelemente 4.1 und 4.2 jeweils gemäß Figur 2 oder 3 ein monotones Positionssignal 10 mit jeweils einem Wert eines Wertebereichs für jeweils eine Position 13 entlang der Messstrecke 3 des Gebermagneten 2 gemäß Figur 1 erzeugen.

Weiter ist gemäß Figur 1 eine Auswerteeinheit 9 vorgesehen, wobei die Auswerteeinheit ausgebildet ist, ein linearisiertes Positionssignal 14 nach der Formel;

$$\text{Linearisiertes Positionssignal} = -(1 + \text{Positionssignal des ersten Sensorelements/Positionssignal des zweiten Sensorelements}) * \text{Abstand}/2$$

zu berechnen, wenn der Absolutwert des Positionssignals des ersten Sensorelements kleiner dem Absolutwert des Positionssignals des zweiten Sensorelements ist, oder nach der Formel;

$$\text{Linearisiertes Positionssignal} = (1 + \text{Positionssignal des zweiten Sensorelements/Positionssignal des ersten Sensorelements}) * \text{Abstand}/2$$

zu berechnen, wenn der Absolutwert des Positionssignals des ersten Sensorelements größer dem Absolutwert des Positionssignals des zweiten Sensorelements ist, so dass ein linearisiertes Positionssignal 14 mit einem linearisierten Wertebereich 12 über die gesamte Messstrecke 3 gebildet ist.

Gemäß Figur 2 sind die Kennlinien der Positionssignale dargestellt. Die Kennlinien der Positionssignale weisen jeweils eine Punktsymmetrie auf.

Das erste monotone Positionssignal 10.1 und das zweite monotone Positionssignal 10.2 sind um den Abstand A von beispielsweise 10 mm gegeneinander verschoben. Ein ideales Positionssignal 15 ist eine Gerade mit einer geraden Steigung und Werten über den maximal möglichen Wertebereich. Das linearisierte Positionssignal 14 ist gemäß der Formel:

$$\text{linearisiertes Positionssignal} = -(1 + \text{Positionssignal des ersten Sensorelements/Positionssignal des zweiten Sensorelements}) * \text{Abstand/2}$$

berechnet, da der Absolutwert des Positionssignal 10.1 des ersten Sensorelements kleiner dem Absolutwert des Positionssignals 10.2 des zweiten Sensorelements ist. Das linearisierte Positionssignal 14 weist einen Linearitätsfehler 16 auf gegenüber dem idealen Positionssignal 15.

Gemäß Figur 3 sind ebenfalls Kennlinien der Positionssignale dargestellt. Die Kennlinien der Positionssignale weisen jeweils eine Punktsymmetrie auf, weisen jedoch gegenüber Figur 2 andere Werte auf. Gemäß Figur 3 kann der Abstand A von beispielsweise 10 mm noch verbessert werden, um den Linearitätsfehler noch weiter zu minimieren.

Bezugszeichen:

1 Sensor
2 Gebermagnet
3 Messstrecke
4 Sensorelemente
4.1 erstes Sensorelement
4.2 zweites Sensorelement
5 Magnetfeld
6, 7 Komponente
9 Auswerteeinheit
10 monotones Positionssignal
10.1 erstes monotones Positionssignal
10.2 zweites monotones Positionssignal
13 Position
14 linearisiertes Positionssignal
15 ideales Positionssignal
16 Linearitätsfehler
17 Kolben-/Zylinderanordnung
A Abstand

**Patentansprüche**

1. Sensor (1) zur berührungslosen magnetischen Erfassung linearer Relativbewegung eines Gebermagneten (2) entlang einer Messstrecke (3) mit mindestens zwei identischen Sensorelementen (4, 4.1, 4.2), wobei jedes Sensorelement (4, 4.1, 4.2) mindestens einen Komponenten (6, 7) eines Magnetfeldes (5) des Gebermagneten (2) erfasst, wobei die Sensorelemente (4, 4.1, 4.2) in einem Abstand (A) entlang der Messstrecke (3) angeordnet sind,
   wobei das Sensorelement (4, 4.1, 4.2) kürzer ist als die Messstrecke (3),
   wobei ein Abstand (A) kleiner ist als die Messstrecke (3),
   wobei die Sensorelemente (4, 4.1, 4.2) jeweils ein monotones Positionssignal (10, 10.1, 10.2) mit jeweils einem Wert eines Wertebereichs für jeweils eine Position (13) entlang der Messstrecke (3) des Gebermagneten (2) erzeugen,
   wobei die Kennlinien der Positionssignale (10, 10.1, 10.2) jeweils eine Punktsymmetrie aufweisen,
   wobei eine Auswerteeinheit (9) vorgesehen ist,
   **dadurch gekennzeichnet, dass**
   die Auswerteeinheit ausgebildet ist, ein linearisiertes Positionssignal (14) nach der Formel;

$$\text{Linearisiertes Positionssignal (14)} = -(1 + \text{Positionssignal (10.1) des ersten Sensorelements (4.1)} / \text{Positionssignal (10.2) des zweiten Sensorelements (4.2)}) * \text{Abstand (A)}/2$$

zu berechnen, wenn der Absolutwert des Positionssignals (10.1) des ersten Sensorelements (4.1) kleiner dem Absolutwert des Positionssignals (10.2) des zweiten Sensorelements (4.2) ist,
oder nach der Formel;

$$\text{Linearisiertes Positionssignal (14)} = (1 + \text{Positionssignal (10.2) des zweiten Sensorelements (4.2)} / \text{Positionssignal (10.1) des ersten Sensorelements (4.1)}) * \text{Abstand (A)}/2$$

zu berechnen, wenn der Absolutwert des Positionssignals (10.1) des ersten Sensorelements (4.1) größer dem Absolutwert des Positionssignals (10.2) des zweiten Sensorelements (4.2) ist,
so dass ein linearisiertes Positionssignal (14) mit einem linearisierten Wertebereich über die gesamte Messstrecke (3) gebildet ist.

2. Sensor (1) nach Anspruch 1, **dadurch gekennzeichnet, dass** der Abstand (A) der Sensorelemente (4, 4.1, 4.2) kleiner 20 mm, insbesondere kleiner 15 mm ist.

3. Sensor (1) nach mindestens einem der vorhergenannten Ansprüche, **dadurch gekennzeichnet, dass** der Abstand (A) der Sensorelemente (4, 4.1, 4.2) kleiner 11 mm ist.

4. Sensor nach mindestens einem der vorhergenannten Ansprüche, **dadurch gekennzeichnet, dass** das Sensorelement (4, 4.1, 4.2) zwei senkrecht zueinander stehende Komponenten (6, 7) eines Magnetfeldes (5) des Gebermagneten (2) erfasst.


**Claims**

1. A sensor (1) for the contactless magnetic detection of a linear relative movement of a transducer magnet (2) along a measurement path (3) comprising at least two identical sensor elements (4, 4.1, 4.2), wherein each sensor element (4, 4.1, 4.2) detects at least one component (6, 7) of a magnetic field (5) of the transducer magnet (2),
wherein the sensor elements (4, 4.1, 4.2) are arranged at a spacing (A) along the measurement path (3);
wherein the sensor element (4, 4.1, 4.2) is shorter than the measurement path (3);
wherein a spacing (A) is smaller than the measurement path (3);
wherein the sensor elements (4, 4.1, 4.2) each generate a monotonic position signal (10, 10.1, 10.2) each having a value of a value range for a respective position (13) along the measurement path (3) of the transducer magnet (2), wherein the characteristics of the position signals (10, 10.1, 10.2) each have point symmetry;
wherein an evaluation unit (9) is provided,
**characterized in that**
the evaluation unit is configured to calculate a linearized position signal (14) in accordance with the formula:

$$\text{Linearized position signal (14)} = -(1 + \text{position signal (10.1) of the first sensor element (4.1)} / \text{position signal (10.2) of the second sensor element (4.2)}) * \text{spacing (A)}/2$$

when the absolute value of the position signal (10.1) of the first sensor element (4.1) is smaller than the absolute value of the position signal (10.2) of the second sensor element (4.2);
or in accordance with the formula:

Linearized position signal (14) ) = (1 + position signal (10.2) of the second sensor element (4.2)/position signal (10.1) of the first sensor element (4.2)) * spacing (A)/2

when the absolute value of the position signal (10.1) of the first sensor element (4.1) is larger than the absolute value of the position signal (10.2) of the second sensor element (4.2),
so that a linearized position signal (14) having a linearized value range is formed over the total measurement path (3).

2. A sensor (1) in accordance with claim 1, **characterized in that** the spacing (A) of the sensor elements (4, 4.1, 4.2) is smaller than 20 mm, in particular smaller than 15 mm.

3. A sensor (1) in accordance with at least one of the preceding claims,
**characterized in that** the spacing (A) of the sensor elements (4, 4.1, 4.2) is smaller than 11 mm.

4. A sensor in accordance with at least one of the preceding claims,
**characterized in that** the sensor element (4, 4.1, 4.2) detects two components (6, 7) of a magnetic field (5) of the transducer magnet (2) that are perpendicular to one another.

**Revendications**

1. Capteur (1) pour la détection magnétique sans contact physique d'un mouvement linéaire relatif d'un aimant émetteur (2) le long d'un trajet de mesure (3), comportant au moins deux éléments capteurs identiques (4, 4.1, 4.2), chaque élément capteur (4, 4.1, 4.2) détectant au moins une composante (6, 7) d'un champ magnétique (5) de l'aimant émetteur (2),
dans lequel les éléments capteurs (4, 4.1, 4.2) sont disposés à une distance (A) le long du trajet de mesure (3),
l'élément capteur (4, 4.1, 4.2) est plus court que le trajet de mesure (3), une distance (A) est plus petite que le trajet de mesure (3),
les éléments capteurs (4, 4.1, 4.2) génèrent chacun un signal de position monotone (10, 10.1, 10.2) avec une valeur respective d'une plage de valeurs pour une position respective (13) le long du trajet de mesure (3) de l'aimant émetteur (2),
les courbes caractéristiques des signaux de position (10, 10.1, 10.2) présentent chacune une symétrie ponctuelle,
il est prévu une unité d'évaluation (9),
**caractérisé en ce que**
l'unité d'évaluation est réalisée pour calculer un signal de position linéarisé (14) selon la formule :

signal de position linéarisé (14) = - (1 + signal de position (10.1) du premier élément capteur (4.1) / signal de position (10.2) du deuxième élément capteur (4.2)) * distance (A) / 2

si la valeur absolue du signal de position (10.1) du premier élément capteur (4.1) est inférieure à la valeur absolue du signal de position (10.2) du deuxième élément capteur (4.2),
ou selon la formule :

signal de position linéarisé (14) = (1 + signal de position (10.2) du deuxième élément capteur (4.2) / signal de position (10.1) du premier élément capteur (4.1)) * distance (A) / 2

si la valeur absolue du signal de position (10.1) du premier élément capteur (4.1) est supérieure à la valeur absolue du signal de position (10.2) du deuxième élément de capteur (4.2),
de sorte qu'il se forme un signal de position linéarisé (14) avec une plage de valeurs linéarisée sur tout le trajet de mesure (3).

2. Capteur (1) selon la revendication 1, **caractérisé en ce que** la distance (A) des éléments capteurs (4, 4.1, 4.2) est inférieure à 20 mm, en particulier inférieure à 15 mm.

3. Capteur (1) selon l'une au moins des revendications précédentes, **caractérisé en ce que** la distance (A) des éléments capteurs (4, 4.1, 4.2) est inférieure à 11 mm.

4. Capteur selon l'une au moins des revendications précédentes, **caractérisé en ce que** l'élément capteur (4, 4.1, 4.2) détecte deux composantes (6, 7) d'un champ magnétique (5) de l'aimant émetteur (2) qui sont perpendiculaires l'une à l'autre.

Fig.1

EP 3 617 658 B1

Fig.2

Positionssignal, Abstand Sensorelemente = 10mm

Kennlinie Element 1 — — — Kennlinie Element 2 —— Gesamtpositionssignal ·········· Linearitätsfehler

EP 3 617 658 B1

Fig.3

**IN DER BESCHREIBUNG AUFGEFÜHRTE DOKUMENTE**

**In der Beschreibung aufgeführte Patentdokumente**

- DE 19928557 A1